# EUROPEAN PATENT SPECIFICATION

(11) **EP 4 155 127 B1**
(45) Date of publication and mention of the grant of the patent: **20.11.2024**
(21) Application number: 22187721.0
(22) Date of filing: 29.07.2022
(51) Int. Cl.: B60Q 3/30, B60Q 3/51, B60Q 3/54, B60Q 3/74, B60Q 3/76, B60Q 3/88, F21L 4/08, F21V 21/096, B60Q 3/44, B60Q 3/59

(54) **INTERIOR LAMP FOR AUTOMOBILE AND AUTOMOBILE USING THE SAME**
INNENLEUCHTE FÜR KRAFTFAHRZEUG UND KRAFTFAHRZEUG DAMIT
LAMPE INTÉRIEURE POUR AUTOMOBILE ET AUTOMOBILE L'UTILISANT

(30) Priority: 24.09.2021 CN 202122325212 U
(43) Date of publication of application: 29.03.2023
(73) Proprietor: ZEEKR Automobile Co., Ltd., Ningbo City 315336 (CN); Zhejiang Geely Holding Group Co., Ltd., Hangzhou, Zhejiang 310051 (CN)
(72) Inventor: TANG, Chenchen, Ningbo City, 315336 (CN); QIANG, Kai, Ningbo City, 315336 (CN); XIAO, Chunlei, Ningbo City, 315336 (CN); LIU, Jin, Ningbo City, 315336 (CN); ZHANG, Nianqiang, Ningbo City, 315336 (CN)
(74) Representative: 2K Patentanwälte Blasberg Kewitz & Reichel

(56) References cited:
- WO-A1-93/25408
- CN-A- 110 676 896
- JP-A- 2021 112 941
- KR-A- 20040 038 295
- KR-B1- 101 163 906
- KR-U- 20120 004 083
- US-A1- 2004 145 890
- US-A1- 2006 152 945
- US-A1- 2013 155 659

## Description

### TECHNICAL FIELD

The invention belongs to the technical field of automobiles, particularly to an interior lamp for an automobile and an automobile using the same.

### BACKGROUND

With the development of the economy and science, besides meeting the needs of people's daily travel, people have put forward higher requirements for the practicability and convenience of cars as a means of transportation. In order to facilitate people getting in and out of the car, storing items and reading books, lamps are mounted in many parts of the car. For example, reading dome lamps are mounted on both sides of the front end and rear end of the headliner of the car, and reading lamps are also mounted at the position of the rear trunk. In daily use, reading lamps can provide light sources to meet people's lighting needs.

However, the conventional reading lights in the headliner or trunk of the car are all fixed installations, which are fixedly mounted in a specific position inside the car. The position of the reading lights is fixed after installation, which causes that the light source of the reading lights can only shine in a specific direction, and there is a problem of blind spots. In addition, in the case of failure of the fixedly mounted light, it is difficult to maintain and replace, which may not meet the needs of users when reading in the car. Therefore, improvement is needed.

JP 2021 112941 A discloses a functional component mounting structure for motor vehicles according to the preamble of claim 1, wherein the functional component may be an interior vehicle light. On the vehicle interior there is provided a base material covered by an elastic sheet-like body, in which a plurality of magnets is provided. An accommodation space is formed inside the elastic body. The functional component includes a built-in battery. A protrusion extends perpendicular to the upper surface of the functional component, to be accommodated in the corresponding accommodation space of the elastic body. Moreover, on the upper surface of the functional component, at least one pair of magnets is provided on opposite sides of the protrusion, in a configuration corresponding to the arrangement of the magnets in the elastic body. The magnetic attraction between the magnets secures the functional component to the base material, whereas terminals provided in the accommodation space and protrusion are used to electrically connect the functional component with the electronics of the vehicle.

WO 93/25408 A1 discloses a chargeable pocket light for detachable installation in a carrier in the interior of a motor vehicle or the like, wherein the chargeable pocket light, when installed, is automatically connected to the on-board power supply of the motor vehicle for charging a rechargeable battery of the pocket light. A support for the pocket light is fixedly mounted in the interior of the vehicle and includes a receiving plate with laterally projecting guides and a base, together forming an accommodation space of a shape, which is of rectangular shape and corresponds to the outer shape of the housing of the pocket light. The position of the pocket light in the driving direction of the motor vehicle is secured by the laterally projecting guides of the accommodation space.

### SUMMARY

It is an object of the present invention to provide an interior lamp for an automobile and an automobile using the same, configured for enabling a convenient disassembly and assembly of a fixed mounted reading lamp inside the car and at least reduce difficulties to adjust an illumination angle and range of the reading lamp

This problem is solved by an interior lamp for an automobile as claimed in claim 1, and by an automobile using the same as claimed in claim 10. Further advantageous embodiments are the subject-matter of the dependent claims.

Accordingly, the disclosure further provides an automobile using the interior lamp for the automobile. The automobile using the interior lamp for the automobile includes a headliner, a trunk and at least one interior lamp for the automobile. The interior lamp for the automobile includes a mounting body and a lamp body. The mounting body is provided with a first magnet piece and an inserting component. The lamp body is provided with a second magnet piece and an inserting port. The second magnet piece corresponds to the first magnet piece and the inserting port is matched with the inserting component. The interior lamp for the automobile is mounted on the headliner and/or the trunk.

The disclosure also provides an interior lamp for the automobile and an automobile using the same. The mounting body and the lamp body are magnetically connected through a contact of the first magnet piece and the second magnet piece, and at the same time through the inserting component and the inserting port, which facilitates a disassembly and assembly of the mounting body and the lamp body, and has an effect of good stability at the same time. By setting the inserting component as a USB (Universal Serial Bus) inserting component, and the inserting port may be set as a USB inserting port, the inserting connector and the inserting port may be matched and connected by means of USB connection, so as to charge the lamp body in time.

### BRIEF DESCRIPTION OF THE DRAWINGS

FIG. 1 is a schematic structural view of an interior lamp for an automobile of an embodiment of the invention.
FIG. 2 is a schematic view of a lamp body of an embodiment of the invention.
FIG. 3 is an exploded view of the lamp body of an embodiment of the invention.
FIG. 4 is a schematic view of a mounting body of an embodiment of the invention.
FIG. 5 is an exploded view of the mounting body of an embodiment of the invention.
FIG. 6 is schematic view of an automobile body of an embodiment of the invention.

### DETAILED DESCRIPTION

The following describes the implementation of the invention through specific embodiments, and those skilled in the art can easily understand other advantages and effects of the invention from the content disclosed in this specification. The invention may also be implemented or applied through other different specific embodiments. Various details in this specification may also be modified or changed based on different viewpoints and applications without departing from the scope of the invention as defined by the appended claims.

It should be noted that figures provided in these embodiments only illustrate a basic idea of the invention in a schematic manner. The figures only show the assemblies related to the invention instead of drawing according to number, shape and size of the assemblies in actual implementation. In its actual implementation, type, quantity, and ratio of each assembly may be changed at will, and its assembly layout type may also be more complicated.

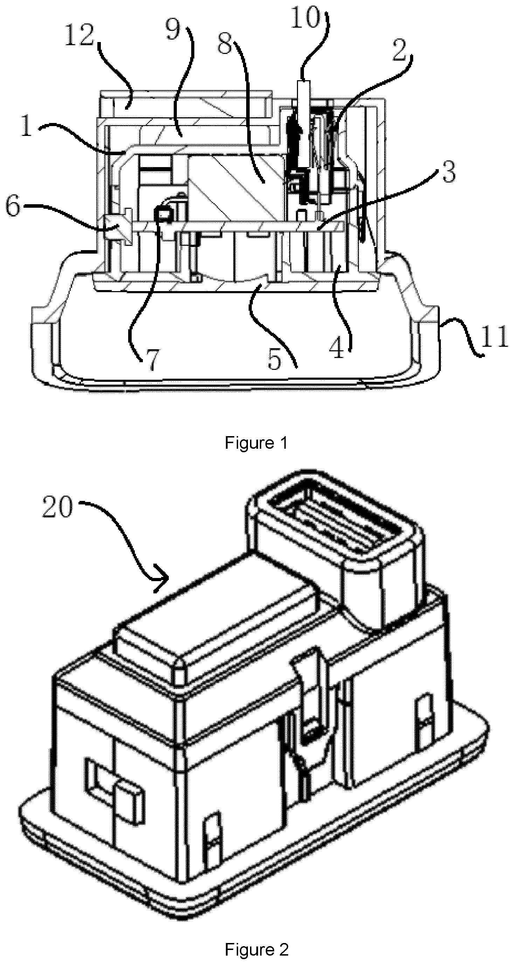

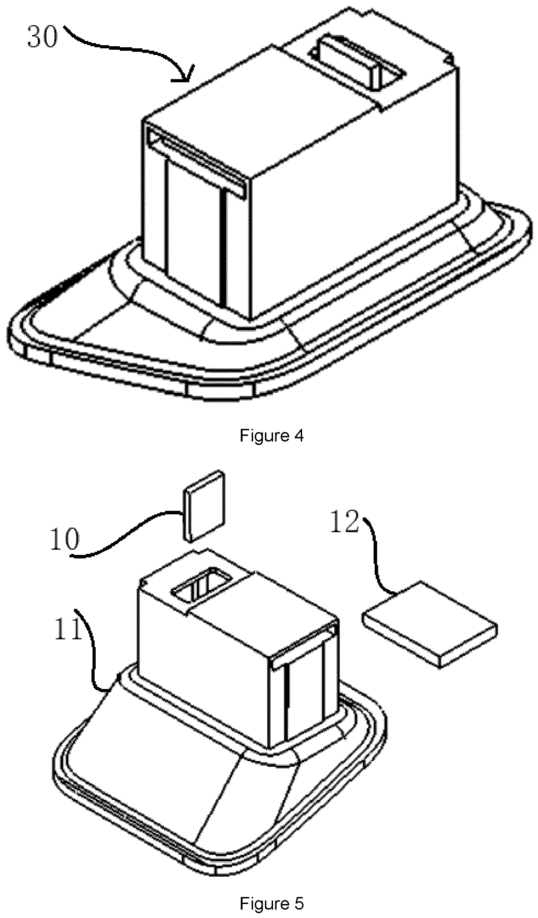

Please refer to FIG. 1, FIG. 2 and FIG. 4. FIG. 1 is a schematic structural view of an interior lamp for an automobile of the disclosure. FIG. 2 is a schematic view of a lamp body of the disclosure. FIG. 4 is a schematic view of a mounting body of the disclosure. The disclosure provides an interior lamp for the automobile. In some embodiments, the interior lamp for the automobile may include a mounting body 30 and a lamp body 20. The mounting body 30 is provided with a first magnet piece 12 and an inserting component 10. The lamp body 20 may be provided with a second magnet piece 9 and an inserting port 2. Positions of the first magnet piece 12 and the second magnet piece 9 may be set correspondingly, and the first magnet piece 12 and the second magnet piece 9 may be connected together by a magnetic attraction force. The inserting component 10 on the mounting body 30 may be matched with the inserting port 2 on the lamp body 20, and the inserting component 10 can be inserted into the inserting port 2. The first magnet piece 12 and the second magnet piece 9 are magnetically attracted, so that the mounting body 30 and the lamp body 20 are connected together. Through a magnetic attraction connection, the lamp body 20 and the mounting body 30 may be easily to be mounted and disassembled. However, during an operation of the automobile, the magnetic attraction connection may cause the mounting body 30 and the lamp body 20 to move with each other, which cannot achieve a stability of mounting the lamp body 20 to the mounting body 30 with a bolt. In order to enable the mounting body 30 and the lamp body 20 to be facilitated the disassembly and mounting, and to have an effect of good stability at the same time, on a basis of a corresponding attraction of the first magnet piece 12 and the second magnet piece 9, the inserting component 10 may be inserted into the inserting port 2, which may further increase a connection strength between the lamp body 20 and the mounting body 30. In addition, an inserting connection between the inserting component 10 and the inserting port 2 also facilitates the disassembly and mounting. The mounting body 30 and the lamp body 20 are connected by the magnetic attraction force through a contact of the first magnet piece 12 and the second magnet piece 9, and at the same time the inserting component 10 is in an inserting connection with the inserting port 2, which has a function of facilitating disassembly and mounting, and at the same time a stability is good.

Please refer to FIG. 1, FIG. 2 and FIG. 4. A specific shape of the mounting body 30 is not limited. According to the invention, the mounting body 30 is a mounting housing, and the lamp body 20 is embedded under the mounting body 30. A specific position of the first magnet piece 12 is not limited, and the first magnet piece 12 may be located on a lower surface of an upper plate of the mounting body 30. According to the invention, the second magnet piece 9 is located on an upper surface of an upper plate of the lamp body 20. The positions of the first magnet piece 12 and the second magnet piece 9 may be set correspondingly. According to the invention, the first magnet piece 12 and the second magnet piece 9 have a rectangular shape. In some embodiments not falling within the invention, the shapes of the first and second magnet pieces may be circular, oval, etc. specific position of the inserting component 10 is not limited. In some embodiments, the inserting component 10 may be located on the lower surface of the upper plate of the mounting body 30. A specific position of the inserting port 2 is not limited. In some embodiments, the inserting port 2 may be located on the upper surface of the upper plate of the lamp body 20. Specific structures of the inserting component 10 and the inserting port 2 are not limited. In some embodiments, the inserting component 10 may be a USB (Universal Serial Bus) inserting component, and the inserting port 2 may be a USB inserting port. Through a USB connection, the inserting component 10 and the inserting port 2 are matched and connected with each other, which ensures that the inserting component 10 and the inserting port 2 are easy to be disassembled and mounted, which achieves a good stability, and ensures that the lamp body 20 can be charged in time.

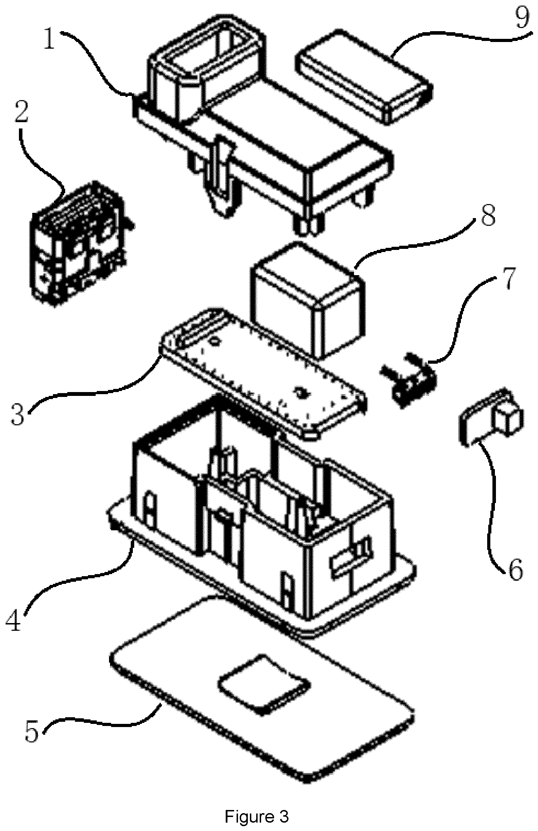

Please refer to FIG. 1 through FIG. 3. FIG. 3 is an exploded view of the lamp body of the disclosure. In some embodiments, the lamp body 20 further includes an upper housing 1, a circuit board 3, a lower housing 4, a light-transmitting plate 5, an adjusting switch 6, a wiring harness component 7 and a battery 8. The second magnet piece 9 and the inserting port 2 are located on the upper housing 1. The upper housing 1 and the lower housing 4 may form an outer housing of the lamp body 20. The circuit board 3, the adjusting switch 6, the wiring harness 7 and the battery 8 may be housed between the upper housing 1 and the lower housing 4. A specific structure of the circuit board 3 is not limited. In some embodiments, the circuit board 3 may be provided with LED (light emitting diode) lights, and a specific number of LED lights mounted on the circuit board 3 is at least one, for example, the number of LED lights mounted on the circuit board 3 may be two. A specific position of the circuit board 3 is not limited. In some embodiments, the circuit board 3 may be located above the lower housing 4, and the lower surface of the lower housing 4 may be transparent, so that an LED lights on the circuit board 3 may perform lighting work. The circuit board 3 may be connected with the adjusting switch 6, and the adjusting switch 6 may be used to control a lighting intensity of the circuit board 3. A specific position of the adjusting switch 6 is not limited. In some embodiments, the adjusting switch 6 may be located at a position of a side wall of the lower housing 4. An advantage of arranging the adjusting switch 6 on the side wall of the lower housing 4 is that it is convenient for a user to adjust the adjusting switch 6 to further adjust the circuit board 3, thereby changing the lighting intensity of the circuit board 3. The circuit board 3 may be connected with the battery 8, the battery 8 may be used to charge the circuit board 3, and the battery 8 may store electrical energy. The wiring harness component 7 may block and limit a connecting wire of the circuit board 3. The lower housing 4 is connected with the light-transmitting plate 5, and the light-transmitting plate 5 may be located under the lower housing 4. The light-transmitting plate 5 may protect the circuit board 3 to avoid damage caused by external objects contacting the circuit board 3. At the same time, the light-transmitting plate 5 also prevents the LED lights on the circuit board 3 from directly irradiating the eyes, and protects people's eyes when reading. The inserting port 2 may be the USB inserting port for charging the circuit board 3 and the battery 8.

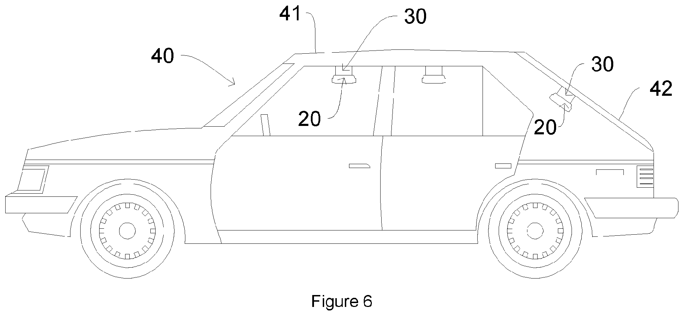

Please refer to FIG. 1, FIG. 4, FIG. 5 and FIG. 6. FIG. 6 is schematic view of an automobile body of the disclosure. FIG. 5 is an exploded view of the mounting body of the disclosure. In some embodiments, the mounting body 30 may further include a mounting housing 11. The inserting component 10 may be the USB inserting component, and the inserting component 10 and the first magnet piece 12 may be located on an upper surface of the mounting housing 11. In some embodiments, the automobile body 40 may include a headliner 41 and a trunk 42. A specific mounting position of the mounting housing 11 is not limited. In some embodiments, the mounting housing 11 may be mounted on the headliner 41 or/and the trunk 42.

In summary, the disclosure provides the interior lamp for the automobile and the automobile using the same. First of all, the interior light is not a clamping structure. A inserting component 10 and a first magnet piece 12 may be arranged on the mounting body 30, and correspondingly, the lamp body 20 may be provided with an inserting port 2 and a second magnet piece 9, which are connected together correspondingly. Next, the inserting component 10 and the inserting port 2 can be set as the USB inserting component and the USB inserting port, and the USB inserting component and the USB inserting port may perform positioning and charging functions of inserting. Then, the two magnet pieces may be attracted and fixed, and surrounding parts of the mounting body 30 may be provided with reinforcing ribs to perform an interference fit, thereby ensuring a mounting stability between the lamp body 20 and the mounting body 30. Then, the interior lamp may be mounted on the headliner 41 or the trunk 42 , and a structure of the interior lamp may improve a versatility of the lamp and facilitate a maintenance and replacement.

Secondly, two LED lights may be arranged on the circuit board 3 of the interior lamp. A side end of the circuit board 3 may be connected with the adjusting switch 6. The adjusting switch 6 may change an input power, so that a brightness of the lamp of the circuit board 3 may be adjusted. This brightness is maintained within a range of a minimum and maximum safe power levels for interior lamps. In addition, photosensitive sensors may be mounted on both sides of the interior lamps, so that lights of the interior lights can be changed according to changes in a brightness of the surrounding environment, which improves a comfort and adaptability of the people in the car cockpit. Finally, after the interior lamp is connected with the USB in the car, it may be electronically adjusted in the car with an on-board system, and an intensity of light perception may be automatically adjusted according to the on-board system to meet needs of users.

Finally, the interior lamp of the disclosure is provided with the battery 8. In a case of normal mounting, the USB inserting component charges the battery 8. When the USB inserting component is pulled out from the USB inserting port, or when the car is powered off, the interior lamp may be powered by the built-in battery 8 to achieve an emergency action, which provides a safety of lights for a car owner when traveling at night.

The above description is only a preferred embodiment of the invention and an explanation of the applied technical principles. Those skilled in the art should understand that the invention is not limited to a technical solution formed by a specific combination of the above technical characteristics, it should also cover other technical solutions formed by any combination of the above technical characteristics within the scope of the invention as defined by the appended claims.

### List of Reference Numerals

- 1: upper housing
- 2: inserting port
- 3: circuit board
- 4: lower housing
- 5: light-transmitting plate
- 6: adjusting switch
- 7: wiring harness component
- 8: battery
- 9: second magnet piece
- 10: inserting component
- 11: mounting housing
- 12: first magnet piece
- 20: lamp body
- 30: mounting body
- 40: automobile body
- 41: headliner
- 42: trunk

## Claims

1. An interior lamp for an automobile, comprising:
a mounting body (30), provided with a first magnet piece (12) and an inserting component (10) and comprising an upper plate, and
a lamp body (20), provided with a second magnet piece (9) and an inserting port (2) and comprising an upper plate, wherein
the second magnet piece (9) corresponds to the first magnet piece (12) and the inserting port (2) is matched with the inserting component (10), **characterized in that,**
the first magnet piece (12) and the second magnet piece (9) each has a rectangular shape,
the mounting body (30) is a mounting housing and the whole lamp body (20) is embedded under the mounting body (30) so that the upper surface of the lamp body (20) faces the upper plate of the mounting body (30),
the inserting component (10) is located within a portion of the upper housing (1) of the lamp body (20) and formed as an accommodating space, which has a rectangular shape in a horizontal plane, is protruding in a vertical direction perpendicular to the horizontal plane and is located near a rectangular upper surface of the upper housing (19), on which the second magnet piece (9) is located, and
the inserting port (2) is inserted into the accommodating space of the inserting port (2) along the vertical direction.

2. The interior lamp according to claim 1, wherein,
the inserting port (2) is a universal serial bus inserting port, and the inserting component (10) is a universal serial bus inserting component.

3. The interior lamp according to any of the preceding claims, wherein,
the lamp body (20) further comprises:
an upper housing (1),
a lower housing (4) connected with the upper housing (1), and
a circuit board (3) located between the upper housing (1) and the lower housing (4).

4. The interior lamp according to claim 3, wherein,
the lamp body (20) further comprises:
a light-transmitting plate (5), connected with the lower housing (4).

5. The interior lamp according to claim 3 or claim 4, wherein,
the lamp body (20) further comprises:
an adjusting switch (6), connected with the circuit board (3).

6. The interior lamp according to claim 5, wherein,
the adjusting switch (6) is mounted on a side wall of the lower housing (4).

7. The interior lamp according to any one of claims 3 to 6, wherein,
the lamp body (20) further comprises:
a battery (8), connected with the circuit board (3).

8. The interior lamp according to any one of claims 3 to 7, wherein,
the lamp body (20) further comprises:
a wiring harness component (7), arranged on a side of the circuit board (3).

9. The interior lamp according to any one of claims 3 to 8, wherein,
a light-emitting diodes are mounted on the circuit board (3).

10. The interior lamp according to any one of claims 3 to 9, comprising a single first magnet piece (12) and a single second magnet piece (9).

11. An automobile, comprising:
a headliner (41),
a trunk (42), and
at least one interior lamp for the automobile according any one of claims 1 to 9, mounted on the headliner (41) and/or the trunk (42).

## Patentansprüche

1. Innenleuchte für ein Kraftfahrzeug, umfassend:
einen Montagekörper (30), der mit einem ersten Magnetteil (12) und einem Einsteckteil (10) versehen ist und eine obere Platte umfasst, und
einen Lampenkörper (20), der mit einem zweiten Magnetteil (9) und einem Einsteckanschluss (2) versehen ist und eine obere Platte umfasst, wobei
das zweite Magnetteil (9) mit dem ersten Magnetteil (12) übereinstimmt und der Einsteckanschluss (2) mit dem Einsteckteil (10) abgestimmt ist, **dadurch gekennzeichnet, dass**
das erste Magnetteil (12) und das zweite Magnetteil (9) jeweils eine rechteckige Form haben,
der Montagekörper (30) ein Montagegehäuse ist und der gesamte Lampenkörper (20) unter dem Montagekörper (30) eingebettet ist, so dass die obere Fläche des Lampenkörpers (20) der oberen Platte des Montagekörpers (30) gegenüberliegt,
das Einsteckteil (10) innerhalb eines Abschnitts des oberen Gehäuses (1) des Lampenkörpers (20) angeordnet und als ein Aufnahmeraum ausgebildet ist, der eine rechteckige Form in einer horizontalen Ebene hat, in einer vertikalen Richtung senkrecht zu der horizontalen Ebene vorsteht und in der Nähe einer rechteckigen oberen Fläche des oberen Gehäuses (19) angeordnet ist, auf der das zweite Magnetteil (9) angeordnet ist, und
der Einsteckanschluss (2) in den Aufnahmeraum des Einsteckanschlusses (2) entlang der vertikalen Richtung eingeführt wird.

2. Innenleuchte nach Anspruch 1, wobei
der Einsteckanschluss (2) ein universeller serieller Bus-Einsteckanschluss ist und das Einsteckteil (10) ein universelles serielles Bus-Einsteckteil ist.

3. Innenleuchte nach einem der vorhergehenden Ansprüche, wobei der Leuchtenkörper (20) weiterhin umfasst:
ein oberes Gehäuse (1),
ein unteres Gehäuse (4), das mit dem oberen Gehäuse (1) verbunden ist, und
eine Leiterplatte (3), die zwischen dem oberen Gehäuse (1) und dem unteren Gehäuse (4) angeordnet ist.

4. Innenleuchte nach Anspruch 3, wobei der Leuchtenkörper (20) weiterhin umfasst:
eine lichtdurchlässige Platte (5), die mit dem unteren Gehäuse (4) verbunden ist.

5. Innenleuchte nach Anspruch 3 oder Anspruch 4, wobei der Leuchtenkörper (20) weiterhin umfasst:
einen Einstellschalter (6), der mit der Leiterplatte (3) verbunden ist.

6. Innenleuchte nach Anspruch 5, wobei der Einstellschalter (6) an einer Seitenwand des unteren Gehäuses (4) angebracht ist.

7. Innenleuchte nach Anspruch 3 oder Anspruch 4, wobei der Leuchtenkörper (20) weiterhin umfasst:
eine Batterie (8), die mit der Leiterplatte (3) verbunden ist.

8. Innenleuchte nach einem der Ansprüche 3 bis 7, wobei der Leuchtenkörper (20) weiterhin umfasst:
ein Kabelbaumteil (7), das auf einer Seite der Leiterplatte (3) angeordnet ist.

9. Innenleuchte nach einem der Ansprüche 3 bis 8, wobei auf der Leiterplatte (3) eine Leuchtdiode angebracht ist.

10. Innenleuchte nach einem der Ansprüche 3 bis 9, umfassend ein einzelnes erstes Magnetteil (12) und ein einzelnes zweites Magnetteil (9).

11. Kraftfahrzeug, umfassend:
einen Dachhimmel (41),
einen Kofferraum (42), und
mindestens eine Innenleuchte für das Kraftfahrzeug nach einem der Ansprüche 1 bis 9, die auf dem Dachhimmel (41) und/oder dem Kofferraum (42) angebracht ist.

## Revendications

1. Une lampe intérieure pour un véhicule automobile, comprenant :
un corps de montage (30), muni d'un premier élément aimanté (12) et d'un composant d'insertion (10), et
un corps de lampe (20), muni d'un deuxième élément aimanté (9) et d'un orifice d'insertion (2), où
le deuxième élément aimanté (9) correspond au premier élément aimanté (12) et l'orifice d'insertion (2) est adapté au composant d'insertion (10),**caractérisé en ce que,**
le premier élément aimanté (12) et le deuxième élément aimanté (9) ont chacun une forme rectangulaire,
le corps de montage (30) est un boîtier de montage et l'ensemble du corps de lampe (20) est encastré sous le corps de montage (30) de sorte que la surface supérieure du corps de lampe (20) soit tournée vers la plaque supérieure du corps de montage (30),
le composant d'insertion (10) est situé dans une partie du boîtier supérieur (1) du corps de lampe (20) et formé en tant qu'espace d'accueil, qui a une forme rectangulaire dans un plan horizontal, est saillant dans une direction verticale perpendiculaire au plan horizontal et est situé près d'une surface supérieure rectangulaire du boîtier supérieur (19), sur laquelle le deuxième élément aimanté (9) est situé, et
l'orifice d'insertion (2) est inséré dans l'espace d'accueil de l'orifice d'insertion (2) le long de la direction verticale.

2. La lampe intérieure selon la revendication 1, dans laquelle,
l'orifice d'insertion (2) est un orifice d'insertion USB, et le composant d'insertion (10) est un composant d'insertion USB.

3. La lampe intérieure selon l'une quelconque des revendications précédentes, dans laquelle,
le corps de lampe (20) comprend en outre :
un boîtier supérieur (1),
un boîtier inférieur (4) raccordé au boîtier supérieur (1), et
une carte de circuit (3) située entre le boîtier supérieur (1) et le boîtier inférieur (4).

4. La lampe intérieure selon la revendication 3, dans laquelle,
le corps de lampe (20) comprend en outre :
une plaque de transmission de lumière (5), raccordée au boîtier inférieur (4).

5. La lampe intérieure selon la revendication 3 ou 4, dans laquelle,
le corps de lampe (20) comprend en outre :
un commutateur de réglage (6), raccordé à la carte de circuit (3).

6. La lampe intérieure selon la revendication 5, dans laquelle,
le commutateur de réglage (6) est monté sur une paroi latérale du boîtier inférieur (4).

7. La lampe intérieure selon l'une quelconque des revendication 3 à 6, dans laquelle,
le corps de lampe (20) comprend en outre :
une batterie (8), raccordée à la carte de circuit (3).

8. La lampe intérieure selon l'une quelconque des revendication 3 à 7, dans laquelle,
le corps de lampe (20) comprend en outre :
un composant de faisceau de câbles (7), agencé sur un côté de la carte de circuit (3).

9. La lampe intérieure selon l'une quelconque des revendication 3 à 8, dans laquelle,
des diodes électroluminescentes sont montées sur la carte de circuit (3).

10. La lampe intérieure selon l'une quelconque des revendication 3 à 9, comprenant un seul premier élément aimanté (12) et un seul deuxième élément aimanté (9).

11. Un véhicule automobile, comprenant :
un ciel de toit (41),
un coffre (42), et
au moins une lampe intérieure pour le véhicule automobile selon l'une quelconque des revendication 1 à 9, montée sur le ciel de toit (41) et/ou le coffre (42).
